# FASCICULE DE BREVET EUROPEEN

(11) **EP 0 499 506 B1**
(45) Date de publication et mention de la délivrance du brevet: **21.09.1994**
(21) Numéro de dépôt: 92400263.7
(22) Date de dépôt: 31.01.1992
(51) Int. Cl.: F16B 37/04

(54) **Ecrou encagé à montage en aveugle sur des panneaux d'épaisseur variable**
Käfigmutter zur Blindbefestigung auf Platten mit variabler Dicke
Caged nut for blind-assembly on boards with variable thickness

(30) Priorité: 11.02.1991 FR 9101540
(43) Date de publication de la demande: 19.08.1992
(73) Titulaire: RAPID S.A., F-75017 Paris (FR)
(72) Inventeur: Leon, Jean-Pierre René, F-78800 Houilles (FR)
(74) Mandataire: Durand, Yves Armand Louis

(56) Documents cités:
- DE-A- 1 500 958
- FR-A- 2 583 469
- FR-A- 2 583 472
- GB-A- 545 898

## Description

La présente invention a essentiellement pour objet un écrou encagé à montage en aveugle sur un panneau, une tôle ou analogue.

On connaît depuis longtemps des écrous encagés comprenant, d'une manière générale, un écrou monté dans une cage munie de pattes (FR-A- 2 583 472).

Cette cage est insérable dans l'orifice d'un panneau ou d'une tôle et est retenue par ses pattes sur le panneau ou la tôle après insertion dans ledit orifice, ledit panneau ou ladite tôle étant interposé entre les pattes de la cage et la face supérieure de l'écrou retenu dans cette cage.

Toutefois, l'utilisation de ce genre d'écrou encagé est limitée. En effet, de tels écrous encagés ne peuvent être utilisés qu'avec des panneaux d'épaisseur fixée ou bien déterminée, c'est-à-dire ne peuvent pas être montés sur des panneaux d'épaisseur variable.

La présente invention a pour but de remédier à cet inconvénient en proposant un écrou encagé perfectionné acceptant des panneaux qui possèdent des épaisseurs variables et même très différentes.

A cet effet, l'invention a pour objet un écrou encagé à montage en aveugle sur un panneau ou analogue et du type comprenant un écrou monté dans une cage avec pattes insérables dans l'orifice d'un panneau et retenue par ses pattes sur le panneau après insertion dans cet orifice, caractérisé en ce qu'entre le fond de la cage et la face d'écrou en regard de ce fond est prévu au moins un élément élastiquement déformable sollicitant l'écrou vers le haut de la cage et ménageant entre ledit fond de la cage et ladite face d'écrou un espace permettant à l'écrou encagé de s'adapter automatiquement à différentes épaisseurs du panneau interposé entre les pattes et la face d'appui de l'écrou sur la panneau.

Suivant un mode de réalisation préféré, l'élément élastiquement déformable précité est constitué par une ou plusieurs languettes découpées dans la cage et dont l'extrémité libre est repliée à l'intérieur et vers le haut de la cage pour prendre appui sur la face d'écrou précitée.

Selon encore une autre caractéristique de l'écrou encagé de cette invention, les pattes de la cage sont dédoublées pour former un premier jeu de pattes tournées vers l'extérieur de la cage afin de permettre la retenue de la cage d'écrou sur le panneau, et un deuxième jeu de pattes tournées vers l'intérieur de la cage pour permettre la retenue de l'écrou sollicité par les languettes précitées, dans la cage.

On précisera ici que le dédoublement des pattes précitées résulte d'une découpe et d'un repliement dans un sens et dans l'autre de l'extrémité libre de deux pattes s'étendant verticalement depuis le fond de la cage.

Suivant un mode de réalisation préféré, les languettes précitées sont découpées dans deux parties opposées du fond de la cage et dans deux bords relevés opposés qui s'étendent depuis ledit fond.

Les caractéristiques et avantages de l'invention apparaîtront mieux dans la description détaillée qui suit et se réfère aux dessins annexés, donnés uniquement à titre d'exemple, et dans lequels:

La figure 1 est une vue en perspective d'un écrou encagé selon cette invention, l'écrou étant représenté en position extraite de la cage pour que cette dernière soit complétement et clairement visible.

La figure 2 est une vue similaire à la figure 1, mais montrant l'écrou en position montée ou retenue dans sa cage.

La figure 3 est une vue en perspective montrant l'écrou encagé de la figure 2 en position insérée et montée dans l'orifice d'un panneau ou d'une tôle relativement mince et illustrée partiellement.

La figure 4 est une vue en coupe suivant la ligne IV-IV de la figure 3.

La figure 5 est une vue identique à celle de la figure 4, mais illustre l'écrou encagé en position montée sur un panneau d'épaisseur plus grande que celle du panneau représenté sur la figure 4.

La figure 6 est une vue identique à la figure 5 et illustrant l'assemblage de deux panneaux à l'aide d'une vis et d'un écrou encagé selon cette invention.

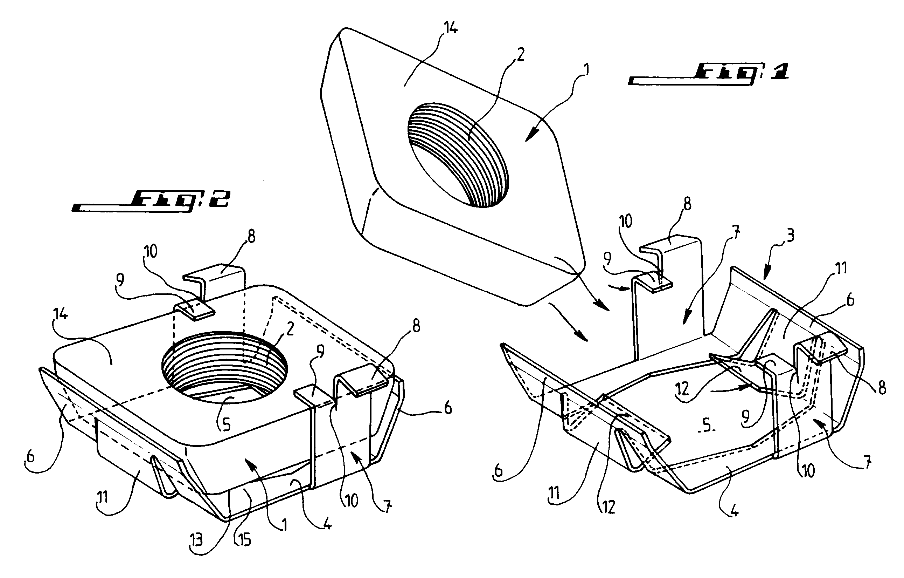

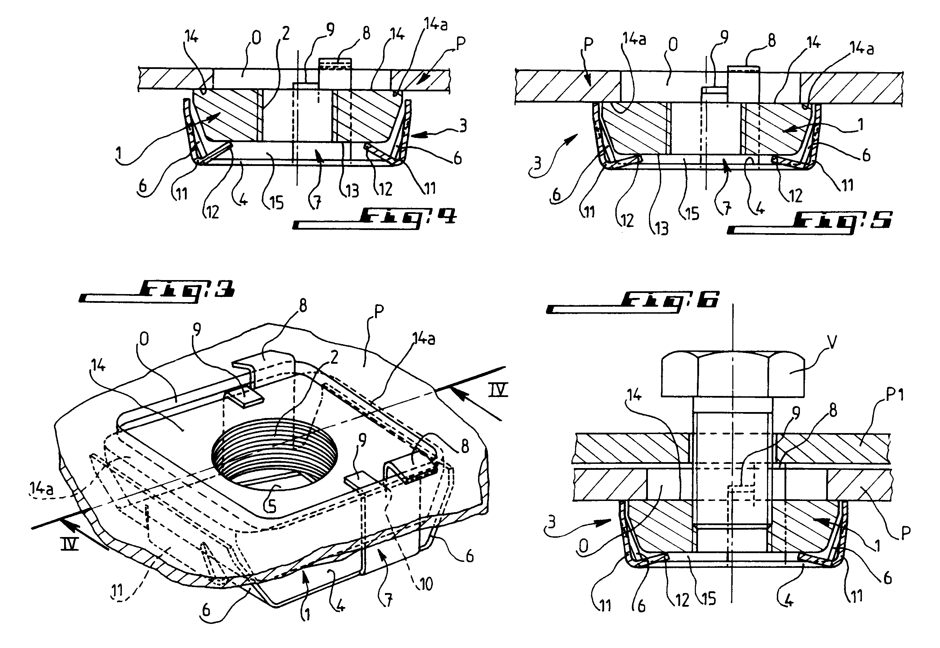

En se reportant aux figures 1 et 2 notamment, on voit un écrou encagé comprenant essentiellement une cage 3 dans laquelle est monté ou retenu un écrou 1 dont l'orifice taraudé est repéré en 2.

La cage 3 comporte un fond 4 perçé d'une ouverture 5 permettant le passage d'une vis V (figure 6) vissée dans l'orifice taraudé 2 de l'écrou 1 pour assembler par exemple des panneaux ou des tôles comme on le décrira ultérieurement.

La cage 3 comporte des bords opposés et relevés 6 qui s'étendent vers le haut depuis le fond 4.

On a montré en 7 deux pattes qui s'étendent sensiblement verticalement depuis le fond 4 de la cage 3 et qui sont chacune dédoublées comme expliqué ci-après.

Chaque patte 7 est dédoublée pour former d'une part deux pattes 8 tournées vers l'extérieur de la cage 3 afin de permettre la retenue de cette cage sur un panneau P après passage de l'écrou encagé au travers d'un orifice 0 ménagé dans le panneau P (voir figures 3 à 6), et d'autre part deux pattes 9 tournées vers l'intérieur de la cage 3 pour permettre la retenue de l'écrou 1 dans ladite cage.

Comme on le voit bien sur la figure 1 le dédoublement de chaque patte 7 pour former une patte 8 et une patte 9 résulte d'une découpe 10 et d'un repliement dans un sens et dans l'autre de l'extrémité libre de la patte 7 qui s'étend verticalement depuis le fond 4 de la cage 3.

Suivant une caractéristique essentielle de l'invention, des languettes ou analogues 11 sont découpées dans la cage 3, et l'extrémité libre 12 de ces languettes 11 est, comme on le voit bien sur les figures, repliée à l'intérieur et vers le haut de la cage 3 pour pouvoir prendre élastiquement appui sur la face 13 d'écrou 1 en regard du fond 4 de la cage 3, c'est-à-dire la face inférieure dudit écrou.

Ainsi, les languettes 11 constituent des éléments élastiquement déformables susceptibles de solliciter l'écrou 1 vers le haut de la cage et en appui par sa face supérieure 14 sur les pattes 9, comme on le voit bien sur la figure 2. Il en résulte qu'avant montage de l'écrou encagé sur un panneau P, un espace ou jeu important 15 est, grâce aux languettes 11, laissé entre le fond 4 de la cage et la face inférieure 13 de l'écrou 1.

On observera que, suivant l'exemple de réalisation représenté, les languettes élastiques 11 sont découpées dans deux parties opposées du fond 4 de la cage 3 et dans les deux bords relevés opposés 6 qui s'étendent depuis le fond 4. Mais on pourrait parfaitement, sans sortir du cadre de l'invention, prévoir des languettes élastiques d'une forme autre que celle représentée, ou même un élement élastique indépendant disposé entre le fond 4 de la cage 3 et la face inférieure 13 de l'écrou 1, et fonctionnant à la manière d'un ressort.

L'écrou encagé de cette invention fonctionne de la façon suivante.

Comme on le voit sur la figure 3, l'écrou encagé est inséré par basculement dans l'orifice 0 du panneau P, jusqu'à ce que finalement les pattes 8 portent sur la face supérieure de ce panneau ce qui permet la retenue de la cage 3 sur ledit panneau qui est interposé ou pris en sandwich entre les pattes 8 et la face supérieure ou d'appui 14 de l'écrou 1. Plus précisément, et comme on le voit bien sur les figures 3 et 4, le panneau P prend appui sur deux bords opposés 14a de la face supérieure 14 de l'écrou 1.

Si le panneau P est relativement mince, comme on le voit sur les figures 3 et 4, il provoquera une pénétration relativement faible (et correspondant à l'épaisseur dudit panneau) de l'écrou 1 dans la cage 3 à l'encontre de la force exercée par l'extrémité 12 des languettes 11 sur la face inférieure 13 de l'écrou. Il en résulte que la hauteur de l'espace 15 entre le fond 4 de la cage 3 et la face inférieure 13 de l'écrou 1 demeure relativement importante.

Ceci permet à l'écrou encagé selon cette invention, comme on le voit bien sur la figure 5, d'accepter une épaisseur de panneau P nettement plus grande que celle du panneau P visible sur la figure 4, puisque l'espace ou le jeu 15 pourra facilement "absorber" l'épaisseur relativement importante du panneau P visible sur la figure 5, étant entendu que, dans ce cas là, la face supérieure 14 de l'écrou 1 sera éloignée du contact avec les pattes 9.

On a donc réalisé suivant l'invention un écrou encagé qui peut s'accomoder automatiquement d'épaisseurs de panneau variables et très différentes.

Une fois l'écrou encagé monté dans l'orifice 0 du panneau P, on peut, comme connu en soi et comme montré sur la figure 6, fixer un autre panneau P1 sur le panneau P à l'aide de la vis V vissée dans l'orifice taraudé 2 de l'écrou 1 et pouvant évidemment traverser l'ouverture 5 dans le fond 4 de la cage 3.

Bien entendu, l'invention n'est nullement limitée au mode de réalisation décrit et illustré qui n'a été donné qu'à titre d'exemple.

C'est ainsi que l'on peut utiliser à la place des languettes 11, toute autre forme d'élément élastiquement déformable qui peut être solidaire de la cage 3 ou de l'écrou 1, ou bien qui peut être indépendant de la cage et de l'écrou tout simplement interposé entre ces deux éléments.

## Revendications

1. Ecrou encagé à montage en aveugle sur un panneau ou analogue (P) et du type comprenant un écrou (1) monté dans une cage avec pattes (7) insérable dans l'orifice (0) d'un panneau (P) et retenue par ses pattes sur le panneau après insertion dans cet orifice, caractérisé en ce qu'entre le fond (4) de la cage (3) et la face (13) d'écrou en regard de ce fond est prévu au moins un élément élastiquement déformable sollicitant l'écrou (1) vers le haut de la cage (3) et ménageant entre ledit fond de la cage et ladite face d'écrou un espace (15) permettant à l'écrou encagé de s'adapter automatiquement à différentes épaisseurs du panneau (P) interposé entre les pattes (7) et la face d'appui (14) de l'écrou (1) sur le panneau.

2. Ecrou encagé selon la revendication 1, caractérisé en ce que l'élément élastiquement déformable précité est constitué par une ou plusieurs languettes (11) découpées dans la cage (3) et dont l'extrémité libre (12) est repliée à l'intérieur et vers le haut de la cage (3) pour prendre appui sur la face d'écrou précitée (13).

3. Ecrou encagé selon la revendication 1 ou 2, caractérisé en ce que les pattes précitées (7) de la cage sont dédoublées pour former un premier jeu de pattes (8) tournées vers l'extérieur de la cage (3) afin de permettre la retenue de la cage d'écrou sur le panneau (P), et un deuxième jeu de pattes (9) tournées vers l'intérieur de la cage (3) pour permettre la retenue de l'écrou (1) sollicité par les languettes précitées (11), dans la cage.

4. Ecrou selon l'une des revendications précédentes, caractérisé en ce que le dédoublement des pattes précitées (7) résulte d'une découpe (10) et d'un repliement dans un sens et dans l'autre de l'extrémité libre de deux pattes (7) s'étendant verticalement depuis le fond (4) de la cage (3).

5. Ecrou encagé suivant la revendication 2 ou 3, caractérisé en ce que les languettes précitées (11) sont découpées dans deux parties opposées du fond (4) de la cage (3) et dans deux bords relevés opposés (6) qui s'étendent depuis ledit fond.

## Patentansprüche

1. Käfigmutter zur Blindanordnung an einer Tafel oder dergleichen (P) und derjenigen Gattung, mit einer in einem in der Öffnung (O) einer Tafel (P) einführbaren Käfig mit Lappen (7) angeordneten Mutter (1), welcher durch seine Lappen an der Tafel nach Einführung in diese Öffnung zurückgehalten wird, dadurch gekennzeichnet, dass zwischen dem Boden (4) des Käfigs (3) und der diesem Boden gegenüberliegenden Mutterfläche (13) wenigstens ein die Mutter (1) aufwärts des Käfigs (3) beaufschlagendes elastisch verformbares Element vorgesehen ist, das zwischen dem besagten Boden des Käfigs und der besagten Mutterfläche einen Raum (15) frei lässt, der der Käfigmutter gestattet, sich automatisch an unterschiedliche Dicken der zwischen den Lappen (7) und der Fläche (14) der Mutter (1) zur Abstützung an der Tafel zwischengefügten Tafel (P) anzupassen.

2. Käfigmutter gemäss Anspruch 1, dadurch gekennzeichnet, dass das vorgenannte elastisch verformbare Element durch eine oder mehrere in dem Käfig (3) ausgeschnittenen Zungen (11) gebildet wird, deren freies Ende (12) nach innen und nach oben des Käfigs (3) umgebogen ist, um sich an der vorgenannten Mutterfläche (13) abzustützen.

3. Käfigmutter nach Anspruch 1 oder 2, dadurch gekennzeichnet, dass die vorgenannten Lappen (7) des Käfigs in zwei geteilt sind, um einen ersten Satz von nach aussen des Käfigs (3) gewandten Lappen (8) zu bilden, um das Zurückhalten des Mutterkäfigs an der Tafel (P) zu gestatten und um einen zweiten Satz von nach innen des Käfigs (3) gewandten Lappen (9) zu bilden, um das Zurückhalten der durch die vorgenannten Zungen beaufschlagten Mutter (1) in dem Käfig zu gestatten.

4. Mutter nach einem der vorangehenden Ansprüche, dadurch gekennzeichnet, dass die Teilung der vorgenannten Lappen (7) in zwei Teile sich aus einem Ausschneiden (10) und einem Umbiegen in der einen und der anderen Richtung des freien Endes der beiden sich senkrecht von dem Boden (4) ab des Käfigs (3) erstreckenden Lappen (7) ergibt.

5. Käfigmutter nach Anspruch 2 oder 3, dadurch gekennzeichnet, dass die vorgenannten Zungen (11) in zwei entgegengesetzten Teilen des Bodens (4) des Käfigs (3) und in zwei entgegengesetzten (hochgezogenen Rändern) (6), die sich von dem besagten Boden ab erstrecken, ausgeschnitten sind.

## Claims

1. Caged nut for blind mounting onto a panel or the like (P) and of the type comprising a nut (1) mounted in a cage with lugs (7) insertable into an opening (O) of a panel (P) and retained by its lugs onto the panel after insertion into this opening, characterized in that between the bottom (4) of the cage (3) and the nut face (13) in front of this bottom is provided at least one elastically deformable element acting upon the nut (1) upwards of the cage (3) and leaving between the said bottom of the cage and the said nut face a space (15) allowing the caged nut to automatically adapt itself to different thicknesses of the panel (P) interposed between the lugs (7) and the face (14) of the nut (1) bearing upon the panel.

2. Caged nut according to claim 1, characterized in that the aforesaid elastically deformable element is constituted by one or several tongues (11) cut out in the cage (3) and the free end (12) of which is bent inwards and upwards of the cage (3) for being caused to bear upon the aforesaid nut face (13).

3. Caged nut according to claim 1 or 2, characterized in that the aforesaid lugs (7) of the cage are divided into two to form a first set of lugs (8) turned outwards of the cage (3) in order to permit the retaining of the nut cage onto the panel (P) and a second set of lugs (9) turned inwards of the cage (3) to permit the retaining of the nut (1) acted upon by the aforesaid tongues (11) within the cage.

4. Nut according to one of the foregoing claims, characterized in that the division of the aforesaid lugs (7) into two results from a cutting out (10) and from a bending in either direction of the free end of two lugs (7) extending vertically from the bottom (4) of the cage (3).

5. Caged nut according to claim 2 or 3, characterized in that the aforesaid tongues (11) are cut out in two opposite portions of the bottom (4) of the cage (3) and in two raised opposite flanges (6) which extend from the said bottom.
